# EUROPÄISCHE PATENTANMELDUNG

(11) **EP 1 773 084 A1**
(43) Veröffentlichungstag der Anmeldung: **11.04.2007**
(21) Anmeldenummer: 05021668.8
(22) Anmeldetag: 04.10.2005
(51) Int. Cl.: H04Q 7/36

(54) **Verschiebung von Funkressourcen zur Mittelung der Interzellinterferenz**

(71) Anmelder: SIEMENS AKTIENGESELLSCHAFT, 80333 München (DE)
(72) Erfinder: Döttling, Martin Dr, 85579 Neubiberg (DE); Gerlach, Heino, 81675 München (DE); Halfmann, Rüdiger, 67697 Otterberg (DE); Hindelang, Thomas, 82256 Fürstenfeldbruck (DE); Krause, Jörn Dr., 12107 Berlin (DE); Lobinger, Andreas, 83714 Miesbach (DE); Michel, Jürgen Dr., 81737 München (DE); Raaf, Bernhard, 82061 Neuried (DE); Zirwas, Wolfgang, 82194 Gröbenzell (DE); Viering, Ingo Dr., 81539 München (DE)

(57) **Zusammenfassung**

Die Erfindung betrifft ein Verfahren zur Kommunikation in einem Funkkommunikationssystem, welches zumindest eine erste (FZ1), eine zweite (FZ2) und eine dritte (FZ3) Funkzelle aufweist, in welchen jeweils eine Basisstation mit Teilnehmerstationen kommuniziert. In der ersten (FZ1), der zweiten (FZ2) und der dritten (FZ3) Funkzelle werden gleiche Funkressourcen verwendet, wobei diese Funkressourcen in kleinste an einzelne Teilnehmerstationen zuweisbare Untereinheiten (R1, R2, R3, R4, R5, R6, R7, R8, R9, R10) aufgeteilt sind. Die Untereinheiten (R1, R2, R3, R4, R5, R6, R7, R8, R9) der zweiten Funkzelle (FZ2) sind gegenüber den Untereinheiten (R1, R2, R3, R4, R5, R6, R7, R8, R9, R10) der ersten Funkzelle (FZ1) um einen Teil einer Untereinheit (R1, R2, R3, R4, R5, R6, R7, R8, R9, R10) verschoben, und die Untereinheiten (R1, R2, R3, R4, R5, R6, R7, R8, R9) der dritten Funkzelle (FZ3) sind gegenüber den Untereinheiten (R1, R2, R3, R4, R5, R6, R7, R8, R9) der zweiten Funkzelle (FZ2) um den gleichen Teil verschoben. Weiterhin betrifft die Erfindung ein Basisstationssystem zur Durchführung der Erfindung.

## Beschreibung

Die Erfindung betrifft ein Verfahren zur Kommunikation in einem Funkkommunikationssystem, welches zumindest drei Funkzellen aufweist, in welchen jeweils eine Basisstation mit Teilnehmerstationen kommuniziert.

In Funkkommunikationssystemen werden Nachrichten, beispielsweise mit Sprachinformation, Bildinformation, Videoinformation, SMS (Short Message Service), MMS (Multimedia Messaging Service) oder anderen Daten, mit Hilfe von elektromagnetischen Wellen über eine Funkschnittstelle zwischen sendender und empfangender Station übertragen. Bei den Stationen kann es sich hierbei je nach konkreter Ausgestaltung des Funkkommunikationssystems um verschiedenartige Teilnehmerstationen oder netzseitige Basisstationen handeln. In einem Mobilfunkkommunikationssystem handelt es sich bei zumindest einem Teil der Teilnehmerstationen um mobile Funkstationen. Das Abstrahlen der elektromagnetischen Wellen erfolgt mit Trägerfrequenzen, die in dem für das jeweilige System vorgesehenen Frequenzband liegen.

Mobilfunkkommunikationssysteme sind oftmals als zellulare Systeme z.B. nach dem Standard GSM (Global System for Mobile Communication) oder UMTS (Universal Mobile Telecommunications System) mit einer Netzinfrastruktur bestehend z.B. aus Basisstationen, Einrichtungen zur Kontrolle und Steuerung der Basisstationen und weiteren netzseitigen Einrichtungen ausgebildet. Außer diesen weiträumig organisierten (supralokalen) zellularen, hierarchischen Funknetzen gibt es auch drahtlose lokale Netze (WLANs, Wireless Local Area Networks) mit einem in der Regel räumlich deutlich stärker begrenzten Funkabdeckungsbereich. Beispiele verschiedener Standards für WLANs sind HiperLAN, DECT, IEEE 802.11, Bluetooth und WATM.

Der Zugriff von Teilnehmerstationen auf das gemeinsame Übertragungsmedium wird bei Funkkommunikationssystemen durch Vielfachzugriffsverfahren/Multiplexverfahren (Multiple Access, MA) geregelt. Bei diesen Vielfachzugriffen werden die Funkressourcen im Zeitbereich (Time Division Multiple Access, TDMA) und/oder im Frequenzbereich (Frequency Division Multiple Access, FDMA) und/oder im Codebereich (Code Division Multiple Access, CDMA) und/oder im Raumbereich (Space Division Multiple Access, SDMA) zwischen den Teilnehmerstationen aufgeteilt.

Der Erfindung liegt die Aufgabe zugrunde, ein effizientes Verfahren zur Kommunikation in einem Funkkommunikationssystem aufzuzeigen, welches zumindest drei Funkzellen umfasst. Weiterhin soll ein zur Durchführung des Verfahrens geeignetes Basisstationssystem vorgestellt werden.

Diese Aufgabe wird durch ein Verfahren mit den Merkmalen des Anspruchs 1 und durch eine Vorrichtung mit Merkmalen eines nebengeordneten Anspruchs gelöst. Vorteilhafte Ausgestaltungen und Weiterbildungen sind Gegenstand von Unteransprüchen.

Das erfindungsgemäße Verfahren betrifft ein Funkkommunikationssystem, welches zumindest eine erste, eine zweite und eine dritte Funkzelle aufweist, in welchen jeweils eine Basisstation mit Teilnehmerstationen kommuniziert. In der ersten, der zweiten und der dritten Funkzelle werden gleiche Funkressourcen verwendet, wobei diese Funkressourcen in kleinste an einzelne Teilnehmerstationen zuweisbare Untereinheiten aufgeteilt sind. Die Untereinheiten der zweiten Funkzelle sind gegenüber den Untereinheiten der ersten Funkzelle um einen Teil einer Untereinheit verschoben, und die Untereinheiten der dritten Funkzelle sind gegenüber den Untereinheiten der zweiten Funkzelle um den gleichen Teil verschoben.

Die drei betrachteten Funkzellen, bei welchen es sich vorzugsweise um benachbarte, d.h. aneinandergrenzende Funkzellen handelt, verwenden zumindest teilweise die gleichen Funkressourcen. D.h. es ist eine Überschneidung bezüglich der den drei Funkzellen zur Verfügung stehenden Funkressourcen vorhanden. Diese gemeinsamen Funkressourcen betrifft das erfindungsgemäße Verfahren der Verschiebung von Funkressourcen. Bei der gemeinsamen Funkressource handelt es sich vorzugsweise um eine kontinuierliche Funkressource, wie z.B. die Frequenz oder die Zeit.

Es existiert eine Untergliederung der Funkressourcen in Untereinheiten. Hierbei ist es nicht möglich, dass eine Basisstation mit einer einzelnen Teilnehmerstation unter Verwendung einer kleineren Funkressource als einer Untereinheit kommuniziert, d.h. eine Kommunikation einer Basisstation mit einer einzelnen Teilnehmerstation unter Verwendung von lediglich Bestandteilen einer Untereinheit ist ausgeschlossen. Möglich hingegen ist es, dass eine Basisstation mit einer einzelnen Teilnehmerstation unter Verwendung von einer oder mehreren Untereinheiten kommuniziert. Betrachtet man die Kommunikation einer Basisstation mit verschiedenen Teilnehmerstationen, so können für diese verschiedenen Kommunikationen verschieden viele Untereinheiten eingesetzt werden. Die Zuweisung der für eine Kommunikation zwischen Basisstation und Teilnehmerstation zu verwendenden Funkressourcen erfolgt durch Signalisierung von der Basisstation an die jeweilige Teilnehmerstation.

Die Untereinheiten der drei betrachteten Funkzellen sind gegeneinander verschoben. Die Dimension der Verschiebung entspricht der Dimension der Funkressource, so ist beispielsweise eine Verschiebung von Frequenzressourcen im Frequenzraum und von Zeitressourcen in der Zeit möglich. Das Ausmaß der Verschiebung beträgt einen Teil einer Untereinheit, d.h. es wird um weniger als eine Untereinheit verschoben. Diese Verschiebung resultiert darin, dass die Begrenzungen, d.h. der "Startpunkt" und der "Endpunkt", der Untereinheiten von jeweils zwei Funkzellen gegeneinander verschoben sind, und zwar jeweils um den Teil einer Untereinheit. Für zwei in Bezug auf die Untereinheiten ihrer gemeinsamen Funkressourcen gegeneinander verschobene Funkzellen existiert somit keine Untereinheit einer der beiden Funkzellen, deren Begrenzungen mit den Begrenzungen einer Untereinheit der anderen Funkzelle zusammenfallen.

Die Untereinheiten der zweiten Funkzelle sind gegenüber den Untereinheiten der ersten Funkzelle um einen Teil einer Untereinheit verschoben. Um den gleichen Teil sind die Untereinheiten der dritten Funkzelle gegenüber den Untereinheiten der zweiten Funkzelle verschoben. Da die Verschiebung der Untereinheiten der dritten Funkzelle gegenüber den Untereinheiten der zweiten Funkzelle die gleiche ist wie die Verschiebung zwischen den Untereinheiten der zweiten Funkzelle gegenüber denjenigen der ersten Funkzelle, existiert zwischen den Untereinheiten der ersten und der dritten Funkzelle eine Verschiebung um den zweifachen Teil einer Untereinheit.

Die Verschiebung der Funkressourcen verschiedener Funkzellen gegeneinander kann ausschließlich Funkressourcen für die Übertragung in Abwärtsrichtung, d.h. von den Basisstationen an Teilnehmerstationen, oder ausschließlich Funkressourcen für die Übertragung in Aufwärtsrichtung, d.h. von Teilnehmerstationen an Basisstationen, oder beide Übertragungsrichtungen betreffen.

Neben der ersten, der zweiten und der dritten Funkzelle können weitere Funkzellen vorhanden sein. Diese können das erfindungsgemäße Verfahren wie auch die erste, die zweite und die dritte Funkzelle jeweils in Dreiergruppen anwenden. Es ist jedoch auch möglich, dass eine vierte Funkzelle existiert, deren Untereinheiten gegenüber den Untereinheiten der dritten Funkzelle um den Teil einer Untereinheit verschoben sind, und somit gegenüber den Untereinheiten der zweiten Funkzelle um den zweifachen Teil einer Untereinheit und gegenüber den Untereinheiten der ersten Funkzelle um den dreifachen Teil einer Untereinheit. In diesem Fall wird die Erfindung auf einer Vierergruppe von Funkzellen angewandt. Auch Gruppen mit mehr als vier Funkzellen sind möglich.

In Weiterbildung der Erfindung handelt es sich bei den Untereinheiten um eine Mehrzahl benachbarter Subträger eines Frequenzbandes. Bei dem Teil einer Untereinheit, um welchen die Untereinheiten verschoben sind, kann es sich in diesem Fall um eine Anzahl von Subträgern handeln, welche kleiner als die Mehrzahl ist. Die Verschiebung erfolgt somit um ganze Subträger, wobei um weniger Subträger verschoben wird als eine Untereinheit aufweist. Bei dem Teil einer Untereinheit handelt es sich vorzugsweise um eine Anzahl von Subträgern, welche sich durch Division der Mehrzahl durch eine ganze Zahl ergibt, oder auch durch eine solche Division und Auf- oder Abrundung des Ergebnisses. Bei der ganzen Zahl handelt es sich vorzugsweise um 3 oder 4, auch größere Zahlen wie 5 oder höher sind möglich. Eine Auf- oder Abrundung auf die größere oder kleinere ganze Zahl kann dann stattfinden, wenn das Ergebnis der Division nicht ganzzahlig ist. Die ganze Zahl entspricht vorzugsweise einer Anzahl von Funkzellen, für welche die Verschiebung der Untereinheiten gegeneinander gilt, so dass die Frequenzgrenzen einer jeden Untereinheit einer jeden Funkzelle der Anzahl sich von den Frequenzgrenzen aller anderen Untereinheiten aller anderen Funkzellen der Anzahl unterscheiden.

Einer Weiterbildung der Erfindung gemäß handelt es sich bei den Untereinheiten um einzelne Subträger eines Frequenzbandes, wie z.B. bei IFDMA (Interleaved Frequency Division Multiple Access) oder Interleaved OFDMA (Interleaved Orthogonal Frequency Division Multiple Access). Bei dem Teil einer Untereinheit kann es sich in diesem Fall um einen Bruchteil eines Subträgers handeln, welcher sich durch Division der Breite eines Subträgers durch eine ganze Zahl ergibt. Bei der ganzen Zahl handelt es sich vorzugsweise um 3 oder 4, auch größere Zahlen wie 5 oder höher sind möglich. Die ganze Zahl entspricht vorzugsweise einer Anzahl von Funkzellen, für welche die Verschiebung der Untereinheiten gegeneinander gilt, so dass die Frequenzgrenzen einer jeden Untereinheit einer jeden Funkzelle der Anzahl sich von den Frequenzgrenzen aller anderen Untereinheiten aller anderen Funkzellen der Anzahl unterscheiden.

Einer anderen vorteilhaften Weiterbildung der Erfindung gemäß handelt es sich bei den Untereinheiten um Zeiteinheiten. Bei dem Teil einer Untereinheit kann es sich in diesem Fall um einen Bestandteil einer Zeiteinheit handeln, welcher sich durch Division der Länge einer Zeiteinheit durch eine ganze Zahl ergibt. Bei der ganzen Zahl handelt es sich vorzugsweise um 3 oder 4, auch größere Zahlen wie 5 oder höher sind möglich. Die ganze Zahl entspricht vorzugsweise einer Anzahl von Funkzellen, für welche die Verschiebung der Untereinheiten gegeneinander gilt, so dass die Start- und Endzeitpunkte eine jeden Untereinheit einer jeden Funkzelle der Anzahl sich von den Start- und Endzeitpunkten aller anderen Untereinheiten aller anderen Funkzellen der Anzahl unterscheiden.

In Ausgestaltung der Erfindung wird das Verfahren lediglich innerhalb von Teilbereichen der ersten, der zweiten und der dritten Funkzelle durchgeführt. Außerhalb der jeweiligen Teilbereiche müssen keine gleichen Funkressourcen in den drei Funkzellen verwendet werden; bei Verwendung von gleichen Funkressourcen außerhalb der Teilbereiche muss keine Verschiebung der Untereinheiten gegeneinander vorliegen. Hierdurch ist es z.B. möglich, dass die Verschiebung der Untereinheiten nur im Inneren der drei Funkzellen angewandt wird, während in den Randgebieten der drei Funkzellen andere Verfahren zur Verringerung von Interferenzeffekten zum Einsatz kommen.

Vorteilhaft ist es, wenn die Basisstation der ersten und/oder der zweiten und/oder der dritten Funkzelle Informationen, welche für eine Mehrzahl von Teilnehmerstationen bestimmt sind, unter Verwendung von kleineren Funkressourcen als eine Untereinheit sendet. Diese kleineren Funkressourcen sind nicht einer einzelnen Teilnehmerstation zugewiesen, da sie der Übertragung von an mehrere Teilnehmerstationen gerichteten Informationen dienen. Bei den Informationen für mehrere Teilnehmerstationen kann es sich z.B. um Signalisierungsinformationen handeln. Die kleineren Funkressourcen liegen vorzugsweise nicht zwischen den einzelnen Teilnehmern zugewiesenen Untereinheiten, sondern an den Rändern des Gebietes der Untereinheiten bzw. neben den Untereinheiten, im Frequenzraum somit bei niedrigeren und/oder höheren Frequenzen als die Untereinheiten der Teilnehmerstationen. Auf diese Weise kann der Versatz, welcher weniger als eine Untereinheit beträgt und durch die Verschiebung der Untereinheiten entsteht, sinnvoll genutzt werden. Zu den kleineren Funkressourcen als eine Untereinheit kann zur Versendung der Informationen, welche für eine Mehrzahl von Teilnehmerstationen bestimmt sind, eine oder mehrere vollständige Untereinheiten hinzugenommen werden.

In Ausgestaltung der Erfindung erfolgt in der ersten, der zweiten und der dritten Funkzelle zum Zwecke der Zuordnung von Teilnehmerstationen zu Untereinheiten jeweils eine Sortierung der Teilnehmerstationen der jeweiligen Funkzelle nach der Anzahl der ihnen jeweils zugewiesenen Untereinheiten und im Anschluss eine zyklische Vertauschung der Teilnehmerstationen. Die zyklische Vertauschung in den verschiedenen Funkzellen ist vorzugsweise in gleicher Art aufeinander abgestimmt wie die Verschiebung der Untereinheiten. Nach erfolgter Zuordnung der Teilnehmerstationen zu Untereinheiten kann die Zuweisung der zugeordneten Untereinheiten an die Teilnehmerstationen erfolgen.

Einer Weiterbildung der Erfindung gemäß werden in der ersten und/oder der zweiten und/oder der dritten Funkzelle Bestätigungsnachrichten betreffend Bestandteile von auf Untereinheiten übertragenen Nachrichten gesendet, wobei die Bestandteile auf einer Funkressource der Größe des Teils einer Untereinheit übertragen wurden. Es werden somit Nachrichten auf einer oder auch auf mehreren Untereinheiten übertragen, und die Bestätigungsnachrichten in Bezug auf diese Nachrichten beziehen sich nicht auf die ganzen Nachrichten, sondern lediglich auf einen Bestandteil der Nachrichten. Dieser Bestandteil entspricht dem Teil einer Nachricht, welcher auf einem von der Größe her der Verschiebung entsprechenden Teil einer Untereinheit übertragen wurde. Wird beispielsweise eine Verschiebung um 2 Subträger eingesetzt, während eine Untereinheit aus 6 benachbarten Subträgern besteht, so können 3 Bestätigungsnachrichten gesendet werden, einmal bezogen auf den auf dem ersten und dem zweiten der 6 Subträger gesendeten Nachrichtenteil, auf den auf dem dritten und dem vierten der 6 Subträger gesendeten Nachrichtenteil, sowie auf den auf dem fünften und dem sechsten der 6 Subträger gesendeten Nachrichtenteil.

Das erfindungsgemäße Basisstationssystem umfasst zumindest eine erste, eine zweite und eine dritte Basisstation. Jede Basisstation weist Mittel auf zum Verwenden von gleichen Funkressourcen wie die anderen beiden Basisstationen zur Kommunikation mit Teilnehmerstationen. Diese Funkressourcen sind in kleinste an einzelne Teilnehmerstationen zuweisbare Untereinheiten aufgeteilt. Die von der zweiten Basisstation verwendeten Untereinheiten sind gegenüber den von der ersten Basisstation verwendeten Untereinheiten um einen Teil einer Untereinheit verschoben, und die von der dritten Basisstation verwendeten Untereinheiten sind gegenüber den von der zweiten Basisstation verwendeten Untereinheiten um den gleichen Teil verschoben.

Das erfindungsgemäße Basisstationssystem eignet sich insbesondere zur Durchführung des erfindungsgemäßen Verfahrens, wobei dies auch auf die Ausgestaltungen und Weiterbildungen zutreffen kann. Hierzu kann es weitere geeignete Mittel umfassen.

Im folgenden wird die Erfindung anhand eines Ausführungsbeispiels näher erläutert. Dabei zeigen:
- Figur 1:: einen Ausschnitt aus einem Funkkommunikationssystem
- Figur 2:: die Aufteilung eines Frequenzbandes in Untereinheiten,
- Figur 3:: eine Zuordnung von Untereinheiten eines Frequenz- bandes zu Teilnehmern.

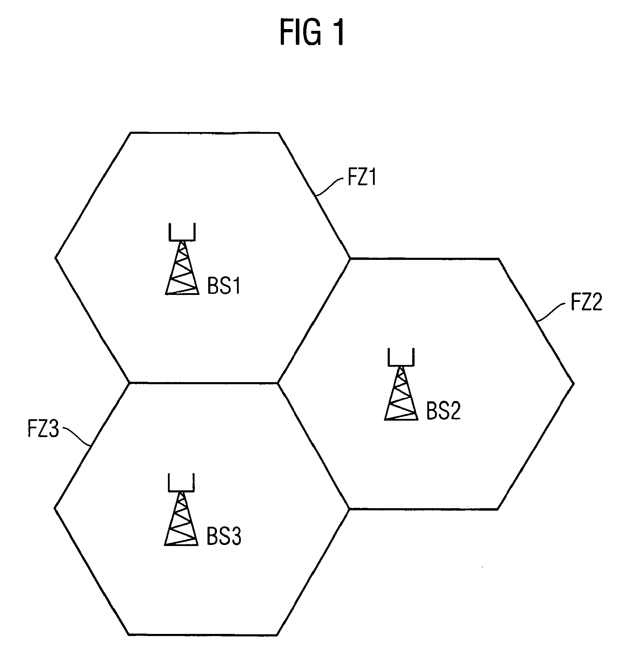

Der in Figur 1 dargestellte Ausschnitt aus einem Funkkommunikationssystem umfasst die Funkzelle FZ1 der Basisstation BS1, die Funkzelle FZ2 der Basisstation BS2, sowie die Funkzelle FZ3 der Basisstation BS3. Die Basisstationen BS1, BS2 und BS3 kommunizieren in ihrer jeweiligen Funkzelle FZ1, FZ2 oder FZ3 mit nicht dargestellten Teilnehmerstationen. Die drei Funkzellen FZ1, FZ2 und FZ3 grenzen aneinander, so dass Signale der verschiedenen Funkzellen FZ1, FZ2 und FZ3 miteinander interferieren. Bei den betrachteten Funkzellen FZ1, FZ2 und FZ3 kann es sich z.B. um Zellen eines zellularen, eine Vielzahl weiterer Funkzellen aufweisenden Funkkommunikationssystems handeln, sie können jedoch auch Bestandteil eines lokal begrenzten Systems sein, welches lediglich die drei Funkzellen FZ1, FZ2 und FZ3 oder die drei Funkzellen FZ1, FZ2 und FZ3 und wenige andere Funkzellen aufweist.

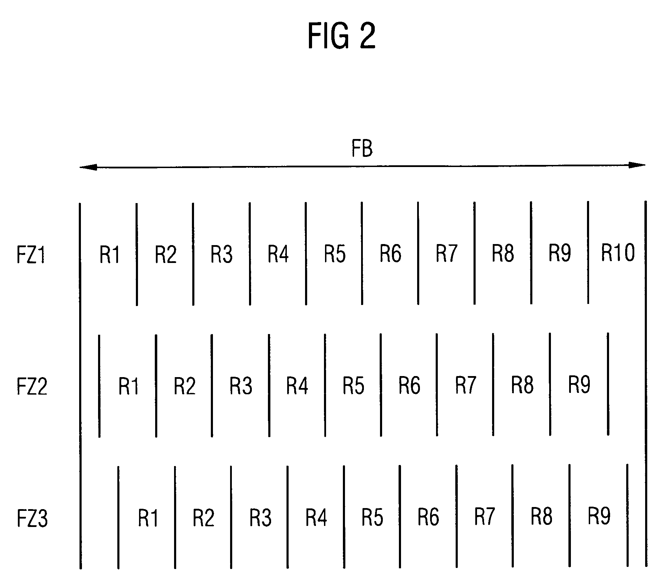

Für die Kommunikation der Basisstationen BS1, BS2 und BS3 mit Teilnehmerstationen steht ein in Figur 2 dargestelltes Frequenzband FB zur Verfügung. Das Frequenzband FB wird in den drei benachbarten Funkzellen FZ1, FZ2 und FZ3 verwendet, d.h. für das Frequenzband FB wird ein Frequenzwiederholfaktor von 1 eingesetzt. Das Frequenzband FB ist in gleich große Untereinheiten, in Figur 2 mit R1 bis R10 bezeichnet, aufgeteilt. Bei einer Untereinheit, im englischen manchmal als chunk bezeichnet, handelt es sich um die kleinste einer einzelnen Teilnehmerstation für die Kommunikation mit der jeweiligen Basisstationen BS1, BS2 oder BS3 zuweisbare Funkressourceneinheit im Frequenzraum. Die Zuweisung der Untereinheiten kann sich auf die Aufwärts- und oder die Abwärtsrichtung beziehen. Betrachtet man ein OFDM-System (OFDM: Orthogonal Frequency Division Multiplex), so kann es sich bei den Untereinheiten um eine Anzahl von benachbarten OFDM-Subträgern handeln. Handelt es sich bei einer Untereinheit um eine Mehrzahl benachbarter Subträger, so kann man von "localized FDMA" sprechen.

Gemäß Figur 2 ist die Frequenzlage der Untereinheiten in Bezug auf die verschiedenen Funkzellen FZ1, FZ2 und FZ3 gegeneinander verschoben (englisch: dealignment). Die Untereinheiten der Funkzelle FZ2 sind um 1/3 der Breite einer Untereinheit gegen die Untereinheiten der Funkzelle FZ1 verschoben. Weiterhin sind die Untereinheiten der Funkzelle FZ3 um 1/3 der Breite einer Untereinheit gegen die Untereinheiten der Funkzelle FZ2, und somit um 2/3 der Breite einer Untereinheit gegen die Untereinheiten der Funkzelle FZ1 verschoben. Bezogen auf den linken Rand des Frequenzbandes FB wird somit für die Funkzelle FZ1 eine Verschiebung von 0, für die Funkzelle FZ2 eine Verschiebung von 1/3 der Breite einer Untereinheit, und für die Funkzelle FZ3 eine Verschiebung von 2/3 der Breite einer Untereinheit verwendet.

Diese Verschiebung weist den Vorteil auf, dass eine Mittelung der Interferenz in Bezug auf die verschiedenen Teilnehmer einer Funkzelle stattfindet. Würde keine Verschiebung existieren, so würde der Teilnehmer der Funkzelle FZ1, welchem die Untereinheit R6 zugewiesen ist, Interferenz durch die Untereinheiten R6 der Funkzellen FZ2 und FZ3 erfahren, d.h. durch Signale von/für jeweils genau einen anderen Teilnehmer der anderen Funkzellen. Entsprechendes gilt auch für alle anderen Teilnehmer der Funkzelle FZ1. Abhängig von der Position eines ersten Teilnehmers innerhalb seiner Funkzelle und abhängig von der Position eines zweiten Teilnehmers einer anderen Funkzelle erzeugen die Signale von/für den zweiten Teilnehmer für die Kommunikation des ersten Teilnehmers ein bestimmtes Ausmaß an Interferenz. Dies resultiert darin, dass dann, wenn die Untereinheiten verschiedener Funkzellen die gleiche Frequenzlage haben, auf manchen Untereinheiten hohe Interferenz und auf anderen Untereinheiten lediglich wenig Interferenz durch Signale aus Nachbarzellen erfahren wird.

Betrachtet man den Verlauf der von einem Teilnehmer erfahrenen Übertragungsgüte (englisch: Quality of Service) in Abhängigkeit von der erfahrenen Interferenz, so ist dieser Verlauf nicht linear. Vielmehr sinkt die erfahrene Übertragungsgüte mit steigender erfahrener Interferenz überproportional ab. Daher kann die über alle Teilnehmer einer Funkzelle gemittelte erfahrene Übertragungsgüte gesteigert werden, indem ein Mittelwert der erfahrenen Interferenzen eingestellt wird, d.h. für Teilnehmer mit hohen erfahrenen Interferenzwerten wird die Interferenzsituation verbessert und für Teilnehmer mit niedrigen erfahrenen Interferenzwerten wird die Interferenzsituation verschlechtert. Zwar wird durch die Umverteilung der erfahrenen Interferenz nicht die insgesamt pro Funkzelle durch die Nachbarzelle erfahrene Interferenz reduziert, jedoch resultiert daraus eine Verminderung der Varianz der Interferenz und des Auftretens von sehr hohen Interferenzwerten für einzelne Teilnehmer.

Eine derartige Mittelung der Interferenzsituation kann durch die anhand von Figur 2 erläuterte Verschiebung der Funkressourcen erreicht werden. So erfahren beispielsweise Signale der Untereinheit R6 der Funkzelle FZ1 Interferenz von Signalen der Untereinheiten R5 und R6 der Funkzelle FZ2, sowie von Signalen der Untereinheiten R6 und R7 der Funkzellen FZ3. Die Verschiebung der Lagen der Untereinheiten verschiedener Funkzellen gegeneinander führt somit durch die Mittelung der Interzellinterferenz zu einer im Mittel gesteigerten Übertragungsqualität für alle Teilnehmer dieser Zellen. Dies ist insbesondere vorteilhaft für diejenigen Teilnehmer, welche sich am Zellrand befinden, da diese durch Interzellinterferenz in der Regel am meisten betroffen sind.

Zur Berechnung einer geeigneten Verschiebung kann wie folgt vorgegangen werden: die Breite B einer Untereinheit wird durch die ganze Zahl m geteilt, wobei m die Anzahl von Funkzellen ist, auf welche die Verschiebung angewandt werden soll, im betrachteten Ausführungsbeispiel 3. Die Verschiebungen betragen dann ausgehend von einer bestimmten Lage der Untereinheiten als Bezugspunkt 0, B/m, 2B/m,..., (m-1)B/m. Es ist möglich, anstelle der Größe B/m ein abgerundetes Ergebnis zu verwenden. Beträgt beispielsweise die Breite einer Untereinheit 4 Subträger und m=3, dann können als Verschiebungen ganzzahlige Vielfache von einem Subträger, d.h. die Verschiebungen 0, 1 und 2, verwendet werden.

Die Anzahl m der Zellen, welche die beschriebene Funkressourcenverschiebung gegeneinander aufweisen, kann von der konkreten Ausgestaltung des Funkkommunikationssystems abhängen. So eignet sich die Verwendung von m=3 für idealisiert exakt sechseckige Zellen. Die in Figur 1 gezeigte Dreiergruppe von Funkzellen kann in diesem Fall zur Erreichung einer flächendeckenden Funkversorgung so aneinandergesetzt werden, dass es sich bei den direkt an die Funkzelle FZ1 grenzenden Nachbarfunkzellen ausschließlich um die Funkzellen FZ2 und FZ3 handelt. Hierbei ist die auf die Funkzellen FZ1 angewandte Verschiebung für alle Dreiergruppen die gleiche; selbiges gilt auch für die Funkzellen FZ2 und FZ3. Für reale Systeme ist zu erwarten, dass oftmals eine Verwendung von m≥4 vorteilhaft ist. Allerdings sollte berücksichtigt werden, dass die Verteilung der Interferenz sich umso gravierender und somit vorteilhafter auswirkt, je kleiner m ist. Dann je größer m ist, desto weniger werden die Untereinheiten einer Funkzelle gegenüber den Untereinheiten einer anderen Funkzelle verschoben.

Wie in Figur 2 zu sehen, entstehen durch die Verschiebung der Untereinheiten am Rand des Frequenzbandes FB Frequenzbereiche, welche kleiner als eine Untereinheit sind. So existiert am linken Rand des Frequenzbandes FB der Funkzelle FZ2 ein Frequenzbereich, dessen Breite 1/3 der Breite einer Untereinheit ist, und am rechten Rand des Frequenzbandes FB ein Frequenzbereich, dessen Breite 2/3 der Breite einer Untereinheit ist. Am linken Rand des Frequenzbandes FB der Funkzelle FZ3 liegt ein Frequenzbereich, dessen Breite 2/3 der Breite einer Untereinheit ist, und am rechten Rand des Frequenzbandes FB ein Frequenzbereich, dessen Breite 1/3 der Breite einer Untereinheit ist. Diese schmalen "Seitenbänder" (englisch: side bands) werden nicht an einzelne Teilnehmerstationen zugewiesen, sondern stehen der Basisstation zur Versendung von Informationen per Broadcast, d.h. an eine Mehrzahl von Teilnehmern gerichtet, zur Verfügung. Beispielsweise können die Seitenbänder für die Übertragung von Broadcast-, Pilot- oder Synchronisierungssymbolen durch die jeweilige Basisstation verwendet werden. Eine weitere Einsatzmöglichkeit der Seitenbänder ist für gemeinsame Kontrollkanäle (englisch: shard control channels), d.h. Kontrollkanäle, welche Informationen für eine bestimmte Mehrzahl von Teilnehmerstationen enthalten. Z.B. kann ein solcher Kanal 100 Bit Informationen enthalten und von 5 Teilnehmerstationen detektiert werden, so dass jeweils 20 Bit für eine Teilnehmerstation bestimmt sind.

Bezogen auf die Funkzelle FZ1 liegen keine schmalen Seitenbänder vor. Jedoch ist es möglich, die Untereinheiten R1 und/oder R10 am Rand des Frequenzbandes der Funkzelle FZ1 auf die gleiche Weise wie die Seitenbänder der Funkzellen FZ2 und FZ3 einzusetzen.

Die Seitenbänder können bei Bedarf in eine Mehrzahl von unterschiedlichen Kanälen aufgeteilt werden, so können z.B. am rechten Rand des Frequenzbandes FB der Funkzelle FZ2 zwei Kanäle eingerichtet werden, deren Breite jeweils 1/3 der Breite einer Untereinheit ist. Weiterhin kann die Breite der Seitenbänder um eine oder mehrere Untereinheiten vergrößert werden, so kann beispielsweise das Seitenband am rechten Rand des Frequenzbandes FB der Funkzelle FZ2 um die Untereinheit R9 ergänzt werden, welche somit nicht zur Zuweisung an Teilnehmer zur Verfügung steht. In diesem Fall liegt am rechten Rand des Frequenzbandes FB der Funkzelle FZ2 ein Seitenband der Breite 5/3 der Breite einer Untereinheit vor.

Handelt es sich bei den Untereinheiten um benachbarte Subträger, so ist es möglich, dass einem Teilnehmer einer oder mehrere dieser Untereinheiten zugewiesen werden. Verschiedenen Teilnehmern können verschiedene Anzahlen von Untereinheiten zugewiesen werden. Bei mehreren einem Teilnehmer zugewiesenen Untereinheiten handelt es sich vorzugsweise um benachbarte Untereinheiten, die Zuweisung von nicht benachbarten Untereinheiten an eine Teilnehmerstation ist jedoch auch möglich. Unabhängig davon, ob einem Teilnehmer lediglich eines oder mehrere Untereinheiten zuweisbar sind, beträgt die Verschiebung wie in den bisherigen Ausführungen erläutert stets einen Teil einer Untereinheit.

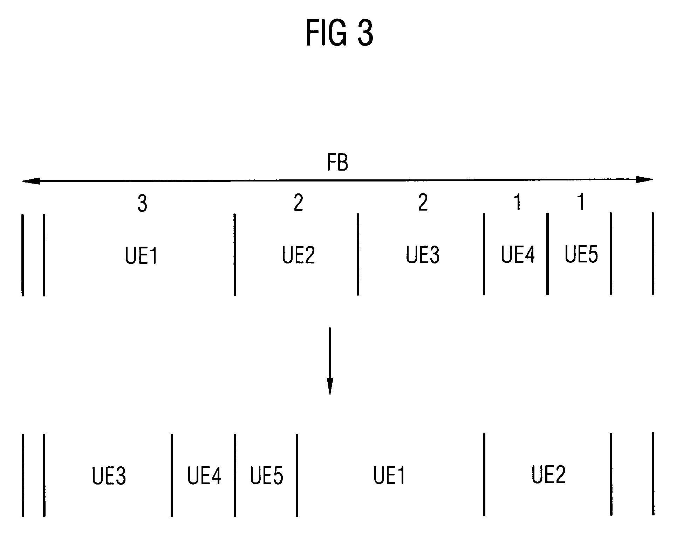

Werden verschiedenen Teilnehmerstationen verschiedene Anzahlen von benachbarten Untereinheiten zugewiesen, so eignet sich zur weiteren Steigerung der Interferenzmittelung zusätzlich zur Verschiebung um einen Teil einer Untereinheit das in Bezug auf Figur 3 erläuterte Vorgehen. Figur 3 zeigt das Frequenzband FZ der Figur 2 mit der von der Funkzelle FZ2 der Figur 2 verwendeten Verschiebung. Es sind 9 an Teilnehmer zuweisbare Untereinheiten vorhanden. Am linken Rand des Frequenzbandes FZ liegt ein Seitenband, dessen Breite 1/3 der Breite einer Untereinheit beträgt, während am rechten Rand ein Seitenband liegt, dessen Breite 2/3 der Breite einer Untereinheit beträgt. Zu Beginn werden die Teilnehmer anhand der Anzahl der ihnen zugewiesenen Untereinheiten sortiert: einem ersten Teilnehmer UE 1 sind drei Untereinheiten zugewiesen, einem zweiten Teilnehmer UE 2 zwei Untereinheiten, einem dritten Teilnehmer UE 3 zwei Untereinheiten, einem vierten Teilnehmer UE 4 eine Untereinheit, und einem fünften Teilnehmer UE 5 eine Untereinheit. Die Teilnehmer werden gemäß dem oberen Teil der Figur 3 entsprechend dieser Sortierung auf die Untereinheiten des Frequenzbandes FB verteilt.

Im Anschluss daran werden die Teilnehmer zyklisch verschoben, wobei jeweils eine Verschiebung um 1/3 der Breite des Frequenzbandes FB erfolgt. Die Zahl 1/3 entspricht hierbei der Verschiebung der Untereinheiten der Funkzelle FZ2. Da die Breite des Frequenzbandes FB der Breite von zehn Untereinheiten entspricht, beträgt die durchzuführende Verschiebung abgerundet 3 Untereinheiten. Durch die zyklische Verschiebung werden die Teilnehmer UE 4 und UE 5 nach rechts aus dem Frequenzband FB herausgeschoben und von links wieder hineingeschoben. Der Teilnehmer UE3 würde an sich nur zur Hälfte herausgeschoben. Um auch dem Teilnehmer UE 3 benachbarte Untereinheiten zuweisen zu können, wird der gesamte Teilnehmer UE 3 an den linken Rand des Frequenzbandes FB geschoben. Durch die beschriebene zyklische Verschiebung ergibt sich eine Zuordnung der Untereinheiten zu den Teilnehmern wie im unteren Teil der Figur 3 dargestellt. Die Untereinheiten werden den Teilnehmern gemäß dieser Zuordnung zugewiesen.

Entsprechend wird auch in Bezug auf die anderen Funkzellen vorgegangen: zuerst erfolgt die Sortierung der Teilnehmer und im Anschluss die zyklische Verschiebung. Da für die Funkzelle FZ1 der Figur 2 die Verschiebung der Untereinheiten 0 beträgt, wird keine zyklische Verschiebung der Zuordnung von Teilnehmern zu Untereinheiten durchgeführt. Da die Verschiebung der Untereinheiten der Funkzelle FZ3 gegenüber der Funkzelle FZ1 das doppelte der Verschiebung der Untereinheiten der Funkzelle FZ2 gegenüber der Funkzelle FZ1 beträgt, gilt dies auch für die zyklische Verschiebung, so dass bei der zyklischen Verschiebung für die Funkzelle FZ3 jeweils um 6 Untereinheiten weitergeschoben wird. Falls eine Verschiebung um 6 Untereinheiten nicht möglich ist, da das Gesamtband eines Teilnehmers sonst getrennt würde, wird wie oben erläutert die Verschiebung vergrößert, bis die Trennung aufgehoben ist.

Durch das beschriebene Vorgehen der Sortierung und zyklischen Verschiebung zusätzlich zur Verschiebung der Untereinheiten wird die Situation vermieden, wonach die Subträger eines Teilnehmers, welchem mehrere Untereinheiten und somit viele Subträger zugewiesen sind, Interferenz im wesentlichen lediglich von einem anderen Teilnehmer erfahren, welchem auch viele Subträger zugewiesen sind. Hierdurch erfolgt eine weitergehende Mittelung der Interferenzsituation über die verschiedenen Teilnehmer einer Funkzelle. Allerdings kann für einen Teilnehmer, welchem lediglich wenige Subträger zugewiesen sind, die Situation entstehen, dass er Interferenz durch die Subträger von lediglich einem Teilnehmer einer anderen Funkzelle, welchem viele Subträger zugewiesen sind, erfährt, und nicht von Subträgern von mehreren Teilnehmern der anderen Funkzelle. Dieser Effekt wird jedoch dadurch abgemildert, dass Signale von/zu Teilnehmern, welchen viele Subträger zugewiesen sind, häufig mit einer niedrigen Leistungsdichte übertragen werden, da das Produkt aus Sendeleistungsdichte und verwendeter Bandbreite in der Regel für verschiedene Teilnehmer gleich ist, so dass Signale von/für Teilnehmerstationen mit vielen Untereinheiten keine starke Interzellinterferenz erzeugen.

In Bezug auf ein Mehrträgerverfahren wie OFDM wurde bislang die Situation beschrieben, gemäß welcher es sich bei einer Untereinheit um eine Anzahl von benachbarten Subträgern handelt. Alternativ ist es möglich, dass es sich bei einer Untereinheit um einen einzigen Subträger handelt. Dies trifft z.B. auf IFDMA (Interleaved Frequency Division Multiple Access) zu. Bei diesem Verfahren wird einem Teilnehmer einer oder mehrere Subträger zugewiesen. Im Fall von mehreren Subträgern sind diese Subträger nicht benachbart zueinander, sondern weisen einen äquidistanten Frequenzabstand zueinander auf. Bei einer Breite des Frequenzbandes FB von 20 Subträgern und der Zuweisung von 4 Subträgern an einen Teilnehmer können diesem z.B. die Subträger 1, 6, 11 und 16 zugewiesen werden. Da es sich bei einer Untereinheit hierbei um lediglich einen Subträger handelt, beträgt die Verschiebung der Lagen der Subträger der verschiedenen Funkzellen gegeneinander weniger als einen Subträger. Werden gemäß Figur 2 drei Funkzellen in das Verschiebungsmuster einbezogen, so betragen die Verschiebungen 0, 1/3, und 2/3 der Breite eines Subträgers.

Die beschriebene Verschiebung der Funkressourcen im Frequenzbereich eignet sich besonders für Frequenzen und/oder Funkzellen, für welche ein Frequenzwiederholabstand von 1 verwendet wird, d.h. benachbarte Funkzellen verwenden die gleichen Frequenzen. Es ist möglich, dass in einer Zelle verschiedene Bereiche existieren, in Bezug auf welche verschiedene Frequenzwiederholabstände angewandt werden. So ist es beispielsweise vorteilhaft, für den Zellrand Frequenzen mit einem Frequenzwiederholabstand von größer als 1 einzusetzen, während für das Zellinnere ein Frequenzwiederholabstand von 1 verwendet wird. In diesem Fall bietet es sich an, die Verschiebung der Funkressourcen nur für den inneren Bereich der Funkzelle einzusetzen, d.h. für den Bereich mit dem Frequenzwiederholabstand von 1. Die Verschiebung der Funkressourcen einer Funkzelle gegenüber den Funkressourcen einer anderen Funkzelle muss sich somit nicht auf die gesamte betrachtete Funkzelle erstrecken, sondern kann auf Teilgebiete der Funkzelle und die für diese Teilgebiete verwendeten Funkressourcen beschränkt sein.

Bestehen die Untereinheiten aus mehreren benachbarten Subträgern, so tritt aufgrund der Verschiebung der Untereinheiten die Situation auf, wonach auf einem Teil der Untereinheit übertragene Signale andere Interferenz erfahren als auf einem anderen Teil der Untereinheit übertragene Signale. Um die hierdurch entstehende Beeinträchtigung von Turbocodes zu schmälern, ist es vorteilhaft, wenn ein geeigneter Interleaver zwischen der Kanalkodierung und der Verteilung der zu übertragenden Symbole auf die jeweiligen Subträger verwendet wird. Alternativ oder zusätzlich hierzu können Bestätigungsnachrichten wie z.B. "ACK" (Acknowledgement) für den korrekten Empfang und NACK (Negative Acknowledgement) für den fehlerhaften Empfang gesendet werden, welche sich jeweils auf einen Teil der Subträger der Untereinheit beziehen, welche durch die Verschiebung hervorgerufen die gleiche Interferenz erfahren. Weist eine Untereinheit beispielsweise eine Breite von neun Subträgern auf, und erfolgt eine Verschiebung um 0, 3 und 6 Subträger, so können die Bestätigungsnachrichten sich jeweils auf drei benachbarte Subträger beziehen. Dies weist den Vorteil auf, dass bei einer ungünstigen Interferenzsituation für einen Teil der Untereinheit nicht die auf allen Subträgern der Untereinheit gesendete Nachricht im Falle eines "NACK" erneut gesendet werden muss, sondern lediglich derjenige Teil der Nachricht, welcher von dem "NACK" betroffen ist.

Das beschriebene Verfahren der Verschiebung der Funkressourcen in der Dimension der Frequenz kann auch auf den Zeitbereich angewandt werden. In diesem Fall liegen bestimmte Zeiteinheiten vor, welche die kleinsten an Teilnehmerstationen zuweisbaren Zeiteinheiten darstellen. Bei einer solchen Untereinheit kann es sich z.B. um ein TTI (Transmission Time Interval) oder um die Dauer der Versendung eines Symbols handeln. Die vorangegangenen Ausführungen betreffend Verschiebungen in der Dimension der Frequenz können entsprechend auf Verschiebungen in der Dimension der Zeit angewandt werden.

Im allgemeinen gilt, dass die konkrete Ausgestaltung der Verschiebung nicht konstant bleiben muss. Vielmehr kann eine einmal festgelegte und verwendete Verschiebung geändert werden.

## Patentansprüche

1. Verfahren zur Kommunikation in einem Funkkommunikationssystem, welches zumindest eine erste (FZ1), eine zweite (FZ2) und eine dritte (FZ3) Funkzelle aufweist, in welchen jeweils eine Basisstation (BS1, BS2, BS3) mit Teilnehmerstationen kommuniziert,
bei welchem in der ersten (FZ1), der zweiten (FZ2) und der dritten (FZ3) Funkzelle gleiche Funkressourcen verwendet werden, wobei diese Funkressourcen in kleinste an einzelne Teilnehmerstationen zuweisbare Untereinheiten (R1, R2, R3, R4, R5, R6, R7, R8, R9, R10) aufgeteilt sind,
wobei die Untereinheiten (R1, R2, R3, R4, R5, R6, R7, R8, R9) der zweiten Funkzelle (FZ2) gegenüber den Untereinheiten (R1, R2, R3, R4, R5, R6, R7, R8, R9, R10) der ersten Funkzelle (FZ1) um einen Teil einer Untereinheit (R1, R2, R3, R4, R5, R6, R7, R8, R9, R10) verschoben sind, und die Untereinheiten (R1, R2, R3, R4, R5, R6, R7, R8, R9) der dritten Funkzelle (FZ3) gegenüber den Untereinheiten (R1, R2, R3, R4, R5, R6, R7, R8, R9) der zweiten Funkzelle (FZ2) um den gleichen Teil verschoben sind.

2. Verfahren nach Anspruch 1, bei dem
es sich bei den Untereinheiten (R1, R2, R3, R4, R5, R6, R7, R8, R9, R10) um eine Mehrzahl benachbarter Subträger eines Frequenzbandes (FB) handelt.

3. Verfahren nach Anspruch 2, bei dem
es sich bei dem Teil einer Untereinheit (R1, R2, R3, R4, R5, R6, R7, R8, R9, R10) um eine Anzahl von Subträgern handelt, welche kleiner ist als die Mehrzahl.

4. Verfahren nach Anspruch 2, bei dem
es sich bei dem Teil einer Untereinheit (R1, R2, R3, R4, R5, R6, R7, R8, R9, R10) um eine Anzahl von Subträgern handelt, welche sich durch Division der Mehrzahl durch eine ganze Zahl ergibt,
oder bei dem
es sich bei dem Teil einer Untereinheit (R1, R2, R3, R4, R5, R6, R7, R8, R9, R10) um eine Anzahl von Subträgern handelt, welche sich durch Division der Mehrzahl durch eine ganze Zahl und Auf- oder Abrundung des Ergebnisses ergibt.

5. Verfahren nach Anspruch 1, bei dem
es sich bei den Untereinheiten (R1, R2, R3, R4, R5, R6, R7, R8, R9, R10) um einzelne Subträger eines Frequenzbandes (FB) handelt.

6. Verfahren nach Anspruch 5, bei dem
es sich bei dem Teil einer Untereinheit (R1, R2, R3, R4, R5, R6, R7, R8, R9, R10) um einen Bruchteil eines Subträgers handelt, welcher sich durch Division der Breite eines Subträgers durch eine ganze Zahl ergibt.

7. Verfahren nach Anspruch 1, bei dem
es sich bei den Untereinheiten (R1, R2, R3, R4, R5, R6, R7, R8, R9, R10) um Zeiteinheiten handelt.

8. Verfahren nach Anspruch 7, bei dem
es sich bei dem Teil einer Untereinheit (R1, R2, R3, R4, R5, R6, R7, R8, R9, R10) um einen Bestandteil einer Zeiteinheit handelt, welcher sich durch Division der Länge einer Zeiteinheit durch eine ganze Zahl ergibt.

9. Verfahren nach einem der Ansprüche 1 bis 8, bei dem
das Verfahren lediglich innerhalb von Teilbereichen der ersten (FZ1), der zweiten (FZ2) und der dritten (FZ3) Funkzelle durchgeführt wird.

10. Verfahren nach einem der Ansprüche 1 bis 9, bei dem
die Basisstation (BS1, BS2, BS3) der ersten (FZ1) und/oder der zweiten (FZ2) und/oder der dritten (FZ3) Funkzelle für eine Mehrzahl von Teilnehmerstationen bestimmte Informationen unter Verwendung einer kleineren Funkressource als eine Untereinheit (R1, R2, R3, R4, R5, R6, R7, R8, R9, R10) sendet.

11. Verfahren nach einem der Ansprüche 1 bis 10, bei dem
in der ersten (FZ1), der zweiten (FZ2) und der dritten (FZ3) Funkzelle zum Zwecke der Zuordnung von Teilnehmerstationen zu Untereinheiten (R1, R2, R3, R4, R5, R6, R7, R8, R9, R10) jeweils eine Sortierung der Teilnehmerstationen der jeweiligen Funkzelle nach der Anzahl der ihnen jeweils zugewiesenen Untereinheiten (R1, R2, R3, R4, R5, R6, R7, R8, R9, R10) und im Anschluss eine zyklische Vertauschung der Teilnehmerstationen erfolgt.

12. Verfahren nach einem der Ansprüche 1 bis 11, bei dem
in der ersten (FZ1) und/oder der zweiten (FZ2) und/oder der dritten (FZ3) Funkzelle Bestätigungsnachrichten betreffend Bestandteile von auf Untereinheiten (R1, R2, R3, R4, R5, R6, R7, R8, R9, R10) übertragenen Nachrichten gesendet werden, wobei die Bestandteile auf einer Funkressource der Größe des Teils einer Untereinheit (R1, R2, R3, R4, R5, R6, R7, R8, R9, R10) übertragenen wurden.

13. Basisstationssystem für ein Funkkommunikationssystem, umfassend zumindest eine erste (BS1), eine zweite (BS2) und eine dritte (BS3) Basisstation,
mit Mitteln der Basisstationen (BS1, BS2, BS3) zum Verwenden von gleichen Funkressourcen zur Kommunikation mit Teilnehmerstationen, wobei diese Funkressourcen in kleinste an einzelne Teilnehmerstationen zuweisbare Untereinheiten (R1, R2, R3, R4, R5, R6, R7, R8, R9, R10) aufgeteilt sind,
wobei die von der zweiten Basisstation (BS2) verwendeten Untereinheiten (R1, R2, R3, R4, R5, R6, R7, R8, R9) gegenüber den von der ersten Basisstation (BS1) verwendeten Untereinheiten (R1, R2, R3, R4, R5, R6, R7, R8, R9, R10) um einen Teil einer Untereinheit (R1, R2, R3, R4, R5, R6, R7, R8, R9, R10) verschoben sind, und die von der dritten Basisstation (BS3) verwendeten Untereinheiten (R1, R2, R3, R4, R5, R6, R7, R8, R9) gegenüber den von der zweiten Basisstation (BS2) verwendeten Untereinheiten (R1, R2, R3, R4, R5, R6, R7, R8, R9) um den gleichen Teil verschoben sind.
